# EUROPEAN PATENT APPLICATION

(11) **EP 4 574 472 A1**
(43) Date of publication of application: **25.06.2025**
(21) Application number: 23220005.5
(22) Date of filing: 22.12.2023
(51) Int. Cl.: B60G 17/015

(54) **SYSTEM AND METHOD FOR DETECTING VIBRATIONS ON AN AUTOMOTIVE VEHICLE, AND AUTOMOTIVE VEHICLE COMPRISING SUCH SYSTEM**

(71) Applicant: Volvo Truck Corporation, 405 08 Göteborg (SE)
(72) Inventor: DWINAL, Andrew, GREENSBORO, 27410 (US)
(74) Representative: Lavoix

(57) **Abstract**

System (100) for detecting vibrations in an automotive vehicle (1) which comprises at least a chassis (10), a driveline system which includes a rotating driveshaft (12) and an axle (14), and a suspension system which includes at least one suspension air bellows (20), the system (100) at least comprising, suitable to be mounted on board of the automotive vehicle (1):
- a controller (2);
- at least one sensor (3, 5) configured to transmit to the controller (2) one or more first signals (S_{P}, S_{A}) indicative of vibrations possibly present onboard the automotive vehicle (1);
- at least one speed sensor (4) configured to transmit to the controller (2) one or more second signals (Sv) indicative of values of the angular velocity of the rotating driveshaft (12); wherein the controller (2) is configured to:
- convert, in the frequency domain, both the one or more first signals (S_{P}, S_{A}) and second signals (Sv) received into respective first and second frequency values;
- compare the first frequency values representing the converted possible vibrations onboard the automotive vehicle (1) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

## Description

### TECHNICAL FIELD

The present disclosure relates generally to the field of automotive vehicles. In particular aspects, the disclosure relates to a system and method for detecting vibrations onboard of automotive vehicles, and to an automotive vehicle comprising such a system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As known, the onset and/or perdurance over time of vibrations in an automotive vehicle can cause some inconveniences.

One source of vibrations in an automotive vehicle may be represented for example by the driveline of the vehicle, i.e. the system consisting of various components aimed at transferring power from the assembly engine-transmission to the wheels, and which driveline includes, among others, the drive axles and the drive shaft connecting the suspended transmission of the vehicle to the non-suspended driven wheels.

If not timely detected, these vibrations can cause discomfort to the driver and to any passenger present onboard during rides.

Further, vibrations may cause early wearing of components that may occur at rates faster than expected, thus potentially leading to an accelerated failure of components.

### SUMMARY

According to a first aspect of the disclosure, there is provided a system for detecting vibrations in an automotive vehicle which comprises at least a chassis, a driveline system which includes a rotating driveshaft and a drive axle, and a suspension system which includes at least one suspension air bellows, the system comprising at least, and suitable to be mounted on board of the automotive vehicle:
- a controller;
- at least one sensor configured to transmit to the controller one or more first signals indicative of vibrations possibly present onboard the automotive vehicle;
- at least one speed sensor configured to transmit to the controller one or more second signals indicative of values of the angular velocity of the rotating driveshaft; wherein the controller is configured to:
- convert, in the frequency domain, both the one or more first signals and second signals received into respective first and second frequency values;
- compare the first frequency values representing the converted possible vibrations onboard the automotive vehicle with the second frequency values representing the converted angular velocity values of the rotating driveshaft; and
- diagnose the presence of detected vibrations caused by the driveshaft when at least one of said first frequency values is a harmonic of a corresponding one frequency of said second frequency values.

The first aspect of the disclosure may seek to detect and diagnose, as early as possible, the presence of vibrations onboard of the automotive vehicle caused by the driveline, and in particular by the driveshaft. A technical benefit may include alerting operators who can timely intervene if necessary to mitigate the negative effects that may be caused by such vibrations.

Optionally in some examples, including in at least one preferred example, the controller is further configured to generate a command signal for adjusting the vertical height between the chassis and the drive axle when the amplitude of the at least frequency whose value is a harmonic of a corresponding one frequency of said second frequency values is higher than a preset threshold. In this way, by intervening on the vertical height, which is directly linked to the onset and/or perdurance and/or amplification of vibrations, the presence and amplitude such vibrations is contrasted, thus mitigating their possible negative effects.

Optionally in some examples, including in at least one preferred example, the detecting system comprises a level sensor configured to provide the controller with signals indicative of the actual vertical height between the chassis and the drive axle. In this way, the vertical height can be continuously monitored to verify if changes, that may influence the onset or further amplification of vibrations, have occurred.

Optionally in some examples, including in at least one preferred example, the controller is configured to generate a command signal for adjusting the vertical height to a desired value based on the signals indicative of the actual vertical height between the chassis and the drive axle provided by the level sensor. In this way, it is possibly to adjust almost in real time the value of the vertical height, for example bringing it to a desired value which can be a previous value or a reference value at which the vibrations are at least mitigated.

Optionally in some examples, including in at least one preferred example, the controller is configured to cause automatically varying the air volume contained in the at least one suspension air bellows to adjust said vertical height. In this way, the presence and amplitude of vibrations is contrasted directly even when the automotive vehicle is travelling, thus mitigating their possible negative effects.

Optionally in some examples, including in at least one preferred example, the at least one sensor comprises at least one pressure sensor configured to transmit to the controller one or more first signals indicative of pressure values detected in the at least one suspension air bellows, and the controller is configured to:
- convert, in the frequency domain, both the one or more first signals and second signals received into respective first and second frequency values representing the pressure values in the suspension air bellows and the angular velocity values of the rotating driveshaft;
- compare the first frequency values representing the converted pressure values in the suspension air bellows with the second frequency values representing the converted angular velocity values of the rotating driveshaft; and
- diagnose the presence of detected vibrations caused by the driveshaft when at least one of said first frequency values is a harmonic of a corresponding one frequency of said second frequency values. In this way, it is possible to exploit a pressure sensor already present onboard automotive vehicles and used to monitor the pressure of the air bellows also for detecting the presence of possible vibrations by sensing the pressure, and hence the force exerted in the air bellow, which is translated into force on the respective axle.

Optionally in some examples, including in at least one preferred example, the at least one sensor comprises an accelerometer which is attached to the chassis and is configured to transmit to the controller one or more first signals indicative of possible vibrations of the chassis, and the controller is configured to:
- convert, in the frequency domain, both the one or more first signals and second signals received into respective first and second frequency values representing the possible vibrations of the chassis and the angular velocity values of the rotating driveshaft;
- compare the first frequency values representing the converted possible vibrations of the chassis with the second frequency values representing the converted angular velocity values of the rotating driveshaft; and
- diagnose the presence of detected vibrations caused by the driveshaft when at least one of said first frequency values is a harmonic of a corresponding one frequency of said second frequency values. In this way, it is possible to more effectively detect the presence of vibrations by monitoring a rigid frame, i.e. the chassis.

According to a second aspect of the disclosure, there is provided a method for detecting vibrations in an automotive vehicle which comprises at least a chassis, a driveline system which includes a rotating driveshaft and a drive axle, and a suspension system which includes at least one suspension air bellows, the method comprising, in whichever suitable order:
- (a): by means of at least one sensor, transmitting to a controller one or more first signals indicative of vibrations possibly present onboard the automotive vehicle;
- (b): transmitting to the controller, by means of at least one speed sensor, one or more second signals indicative of values of the angular velocity of the rotating driveshaft;
- (c): by means of the controller, converting, in the frequency domain, both the one or more first signals and second signals received into corresponding first and second frequency values representing possible vibrations present onboard the automotive vehicle and the angular velocity values of the rotating driveshaft, respectively;
- (d): comparing, by means of the controller, the first frequency values representing the converted possible vibrations onboard the automotive vehicle with the second frequency values representing the converted angular velocity values of the rotating driveshaft; and
- (e): diagnosing the presence of detected vibrations caused by the driveshaft when at least one of said first frequency values is a harmonic of a corresponding one frequency of said second frequency values.

Also this second aspect of the disclosure may seek to detect and diagnose, as early as possible, the presence of vibrations onboard of the automotive vehicle caused by the driveline, and in particular by the driveshaft. A technical benefit may include alerting operators who can timely intervene if necessary to mitigate the negative effects that may be caused by such vibrations.

Optionally in some examples, including in at least one preferred example, the method comprises (f) comparing, by means of the controller, the amplitude of the at least one frequency whose value is a harmonic of a corresponding one frequency of said second frequency values with a preset threshold, and when the compared amplitude is higher than the preset threshold, (g) generating, by means of the controller, a command signal for adjusting the vertical height between the chassis and the drive axle. which is directly linked to the onset and/or perdurance and/or amplification of vibrations, the presence and amplitude such vibrations is contrasted, thus mitigating their possible negative effects.

Optionally in some examples, including in at least one preferred example, the method further comprises providing (h) the controller, by means of a level sensor, with signals indicative of the actual vertical height between the chassis and the drive axle. In this way, the vertical height can be continuously monitored to verify if changes, that may influence the onset or further amplification of vibrations, have occurred.

Optionally in some examples, including in at least one preferred example, said generating (g) comprises generating said command signal for adjusting the vertical height to a desired value based on the signals indicative of the actual vertical height between the chassis and the drive axle provided by the level sensor. In this way, it is possibly to adjust almost in real time the value of the vertical height, for example bringing it to a desired value which can be a previous value or a reference value at which the vibrations are at least mitigated.

Optionally in some examples, including in at least one preferred example, said generating (g) comprises automatically varying the air volume contained in the at least one suspension air bellows to adjust said vertical height. In this way, the presence and amplitude of vibrations is contrasted directly even when the automotive vehicle is travelling, thus mitigating their possible negative effects.

Optionally in some examples, including in at least one preferred example, the at least one sensor comprises a pressure sensor, and wherein said transmitting (a) to a controller one or more first signals indicative of vibrations possibly present onboard the automotive vehicle comprises transmitting to the controller one or more first signals indicative of pressure values detected in the at least one suspension air bellows, wherein said converting (c) comprises converting, in the frequency domain, both the one or more first signals and second signals received into respective first and second frequency values representing the pressure values in the suspension air bellows and the angular velocity values of the rotating driveshaft; wherein said comparing (d) comprises comparing the first frequency values representing the converted pressure values in the suspension air bellows with the second frequency values representing the converted angular velocity values of the rotating driveshaft; and wherein said diagnosing (e) comprises diagnosing the presence of detected vibrations caused by the driveshaft when at least one of said first frequency values is a harmonic of a corresponding one frequency of said second frequency values. In this way, it is possible to exploit a pressure sensor already present onboard automotive vehicles and used to monitor the pressure of the air bellows also for detecting the presence of possible vibrations by sensing the pressure, and hence the force exerted in the air bellow, which is translated into force on the respective axle.

Optionally in some examples, including in at least one preferred example, said at least one sensor comprises an accelerometer which is attached to the chassis and is configured to transmit to the controller one or more first signals indicative of possible vibrations of the chassis, wherein said transmitting (a) to a controller one or more first signals indicative of vibrations possibly present onboard the automotive vehicle comprises transmitting to the controller one or more first signals indicative of possible vibrations of the chassis, and wherein said converting (c) comprises converting, in the frequency domain, both the one or more first signals and second signals received into respective first and second frequency values representing the possible vibrations of the chassis and the angular velocity values of the rotating driveshaft; wherein said comparing (d) comprises comparing the first frequency values representing the converted possible vibrations of the chassis with the second frequency values representing the converted angular velocity values of the rotating driveshaft; and wherein said diagnosing (e) comprises diagnosing the presence of detected vibrations caused by the driveshaft when at least one of said first frequency values is a harmonic of a corresponding one frequency of said second frequency values. In this way, it is possible to more effectively detect the presence of vibrations by monitoring a rigid frame, i.e. the chassis.

In a further aspect, the present disclosure concerns an automotive vehicle comprising a system for detecting vibrations as above indicated, and in particular as described hereinafter and better defined in one or more of the relevant appended claims.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view schematically illustrating an exemplary automotive vehicle which may be equipped with a system for detecting vibrations, according to an example;
**FIG. 2** and **FIG. 3** schematically show portions of an automotive vehicle which may be equipped with a system for detecting vibrations, according to an example;
**FIG. 4** is a block diagram of a system for detecting vibrations in an automotive vehicle, according to an example.
**FIG. 5** is a flow chart of an exemplary method for detecting vibrations on an automotive vehicle, according to an example.

### DETAILED DESCRIPTION

The detailed description set forth below provides information and examples of the disclosed technology with sufficient detail to enable those skilled in the art to practice the disclosure.

Automotive vehicles during their operating life can be subject to vibrations which may cause discomfort to the occupants of the vehicle and further may potential lead to wearing and even failure of components.

As previously indicated, one source of vibrations in a vehicle may be constituted for example by the driveline of the vehicle that as a whole, connects the suspended transmission of the vehicle to the non-suspended driven wheels.

The present disclosure provides solutions capable of early detecting the onset of vibrations onboard of the vehicle thus contrasting when necessary their perduration and/or amplification, thus possibly mitigating as early as possible their negative effects.

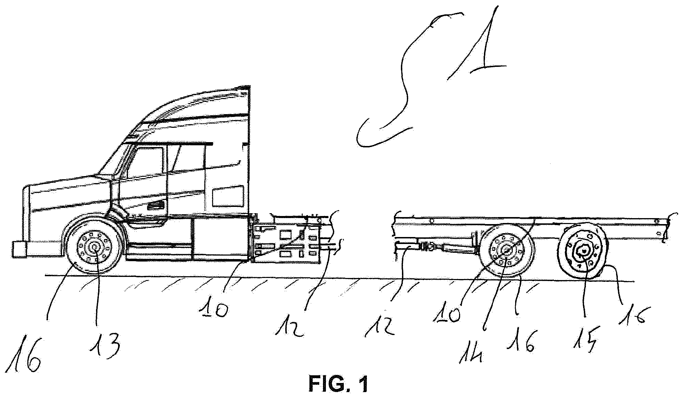

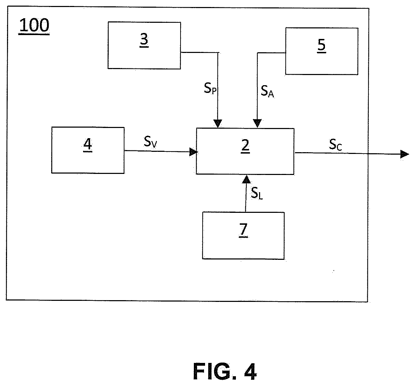

FIG. 1 is an exemplary view schematically illustrating an automotive vehicle, indicated by the overall reference number 1, which may include a system for detecting vibrations, schematically represented in FIG. 4 and therein indicated by the overall reference number 100.

The illustrated automotive vehicle 1 can be of any suitable type, e.g. a car, a van, any heavy-duty vehicle, such as a truck, a bus, et cetera.

According to solutions known in the art or in any case readily available to those skilled in the art and for these reasons not described herein in details, the automotive vehicle 1 comprises, among others, a chassis, schematically represented in the figures by the reference number 10, a driveline system, and a suspension system.

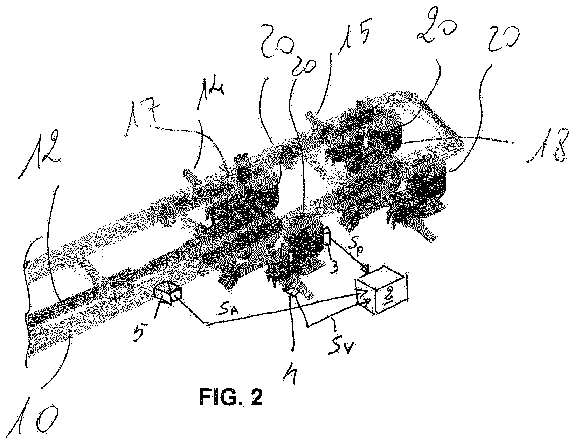

The driveline system comprises a rotating driveshaft, which is schematically represented in FIG. 1 and FIG. 2 by the reference number 12, at least one front axle and one rear axle. In FIG. 1 there are schematically represented a front axle 13, and two rear axles 14 and 15, respectively. At the opposite ends of each axle, the wheels 16 of the automotive vehicle 1 are mounted.

Clearly, the number and positioning of axles may vary depending on the type of automotive vehicle, e.g. more axles can be used, or there may be only one rear drive axle, etc.

According to known solutions, the driveshaft 12 can be formed by one or more pieces, and may comprise one or more joints, such as a U-joint, et cetera. For example, between the two rear drive axles 14 and 15 there may be a single shaft with two U-joints, and between the U-joints and each axle thee may be short shafts. From the transmission of the automotive vehicle 1 to the first axle 14 there may be a single shaft, or two shafts with a carrier bearing.

Further, depending on the type of automotive vehicle, the driveline system may comprise one or more differentials housings or axle housings.

For instance, in the example of FIG. 2, a first axle housing or differential housing is schematically represented by the reference number 17 and interconnects the driveshaft 12 with a first rear drive axle 14, and a second differential housing or axle housing 18 interconnects the rear part of the driveshaft 12 with a second rear drive axle 15 which thus may constitute the or one of the drive axle(s) of the automotive vehicle 1.

Also according to known solutions, the suspension system is used to suspend the frame of the chassis 10 over the wheels 16.

In the examples according to the present disclosures, the suspension system comprises at least one suspension air bellows. The suspension air bellows is known per se and is a pneumatic device manufactured to mimic a bag filled with gas, usually air, and which acts as a kind of rubber spring, thus reducing vibrations and providing better stability during rides. Accordingly, it allows a safer and smoother driving to the vehicle operator regardless of the load carried.

In the example illustrated in FIG. 2, there are schematically illustrated two air suspension bellows, indicated both by the same reference number 20, which are installed at the first rear drive axle 14, and two further air bellows 20 which are installed at the second rear drive axle 15.

Clearly, for each axle there may be used likewise two or any other suitable number of air suspension bellows 20.

FIG. 4 schematically illustrates a block diagram of an exemplary system 100 for detecting vibrations in an automotive vehicle, such as the automotive vehicle 1.

As illustrated the system 100 comprises suitable to be mounted on board of the automotive vehicle 1:
- a controller, schematically represented in FIG. 2 and FIG. 4 by the reference number 2;
- at least one sensor, schematically represented in FIG. 2 and FIG. 4 by the reference numbers 3 and 5, configured to transmit to the controller 2 one or more first signals S_{P}, Sₐ indicative of vibrations possibly present onboard the automotive vehicle 1;
- at least one speed sensor, schematically represented in FIG. 2 and FIG. 4 by the reference 4 configured to transmit to the controller 2 one or more second signals Sv indicative of values of the angular velocity of the rotating driveshaft 12.

The at least one sensor can be for example a sensor suitable to provide the controller 2 with signals indicative of the speed of wheels 16, and the controller 2 may calculate the angular velocity of the rotating driveshaft 12 based on such signals.

In the example of FIG. 2, for the sake of ease of illustration there are represented only one sensor 3, one sensor 5 and one speed sensor 4. Clearly, it is possible to use more sensors, for example more sensors 3 associated with each drive axle.

According to some possible examples, the controller 2 is configured to:
- convert, in the frequency domain, both the one or more first signals S_{P}, S_{A} and second signals Sv received into respective first and second frequency values;
- compare the first frequency values representing the converted possible vibrations onboard the automotive vehicle 1 with the second frequency values representing the converted angular velocity values of the rotating driveshaft 12; and
- diagnose the presence of detected vibrations caused by the driveshaft 12 when at least one of said first frequency values is a harmonic of a corresponding one frequency of said second frequency values.

In some possible examples, such diagnose may result in an alert message, for example to warn the driver of the automotive vehicle 1 about the onset/perdurance of vibrations.

For example, the alert message may be presented in any suitable way, e.g. displayed on a display of the automotive vehicle 1.

The controller 2 may comprise at least one computing device or electronic device capable of including firmware, hardware, and/or executing software instructions to implement the functionality described herein. The controller 2 may include processing circuitry (e.g., processing circuitry including one or more processor devices or control units), a memory, and a system bus.

The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

Although the controller 2 is represented in the examples of FIG. 2 and 4 as a single device, it may include any collection of devices that individually or jointly execute a set (or multiple sets) of instructions to perform any one or more of the functionalities/methodologies discussed herein.

The memory may be one or more devices for storing data and/or computer code for completing or facilitating methods described herein. The memory may include database components, object code components, script components, or other types of information structure for supporting the various activities herein. Any distributed or local memory device may be utilized with the system and method of this disclosure. The memory may be communicably connected to the processing circuitry (e.g., via a circuit or any other wired, wireless, or network connection and may include computer code for executing one or more processes described herein. The memory may include non-volatile memory (e.g., read-only memory (ROM), erasable programmable read-only memory (EPROM), electrically erasable programmable read-only memory (EEPROM), etc.), and volatile memory (e.g., random-access memory (RAM)), or any other medium which can be used to carry or store desired program code in the form of machine-executable instructions or data structures and which can be accessed by a computer or other machine with processing circuitry.

Computer-code which is hard or soft coded may be provided in the form of one or more modules. The module(s) can be implemented as software and/or hard-coded in circuitry to implement the functionality described herein in whole or in part.

In some possible examples, the controller 2 is further configured to generate a command signal Sc for adjusting the vertical height between the chassis 10 and the drive axle 14 once the presence of vibrations caused by the driveshaft 12 onboard of the automotive vehicle 1 has been detected.

The vertical height H is measured between a reference part of the chassis 10, e.g. the bottom side of the chassis 10 and the centerline (i.e. the axis) of an axle, such as the axle 14.

By adjusting the vertical height H, one or more drive axle angles formed between the driveshaft 12 and the chassis 10, and the pinion of each axle and the chassis 10 is/are varied to assume value(s) at which vibrations can be cancelled or at least reduced.

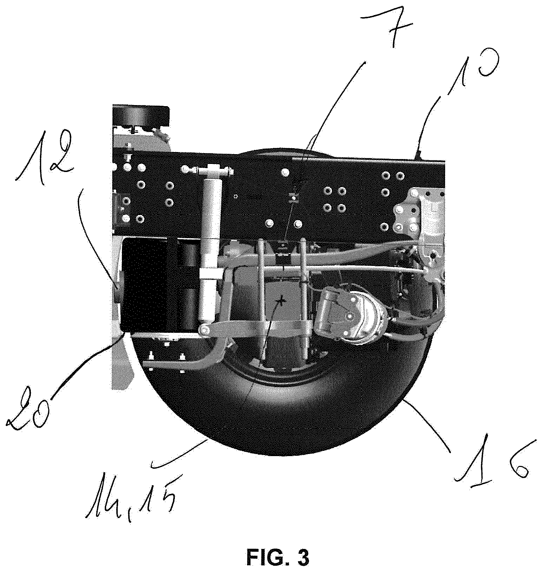

In some possible examples, the system 100 further comprises a level sensor, schematically represented in FIG. 3 and FIG. 4 by the reference 7, which is configured to provide the controller 2 with signals S_{L} indicative of the actual vertical height H between the chassis 10 and the drive axle 14.

For example, the level sensor 7 can comprise or be constituted by a rotary potentiometer.

In some possible examples, the controller 2 is configured to generate a command signal Sc for adjusting the vertical height H to a desired value based on the signals Sv indicative of the actual vertical height H between the chassis 10 and the drive axle 14 provided by the level sensor 7. In practice, the level sensor 7 can be used as a feedback sensor indicating the actual vertical height H, and based on such indications, the controller 2 may adjust the vertical height H, for example to a value which corresponds to a predefined vertical height, or to a value that has shown, during travels, to correspond to the absence of or at least to a reduced amount of onboard vibrations.

In some possible examples, e.g. when the automotive vehicle is provided with an electronically controlled suspension system, the controller 2 is configured to cause automatically varying the air volume contained in the at least one suspension air bellows 20 to adjust said vertical height H. This can be accomplished by pre-programming the controller, or by a driver pushing a command button in the driver's cabin.

In practice, depending on the circumstances, the chassis 10 cab be lifted up or lowered relative to the axle(s) by actuating for example a solenoid valve (not illustrated) to allow air to flow into/out of the bellows 20.

Alternatively, once the driver has been alerted about the presence of detected vibrations caused by the driveshaft 12, then the vertical height can be modified mechanically, e.g. via an operator once the vehicle is stopped, for example at a maintenance service.

In some possible examples, the at least one sensor comprises at least one pressure sensor 3 configured to transmit to the controller 2 one or more first signals S_{P} indicative of pressure values detected in the at least one suspension air bellows 20, and wherein the controller 2 is configured to:
- convert, in the frequency domain, both the one or more first signals S_{P} and second signals Sv received into respective first and second frequency values representing the pressure values in the suspension air bellows 20 and the angular velocity values of the rotating driveshaft 12;
- compare the first frequency values representing the converted pressure values in the suspension air bellows 20 with the second frequency values representing the converted angular velocity values of the rotating driveshaft 12; and
- diagnose the presence of detected vibrations caused by the driveshaft 12 when at least one of said first frequency values is a harmonic of a corresponding one frequency of said second frequency values.

The at least one pressure sensor 3 can be of any suitable type already available on the market capable of detecting pressure values.

In some possible examples, the at least one sensor comprises an accelerometer 5 which is attached to the chassis 10 and is configured to transmit to the controller 2 one or more first signals S_{A} indicative of possible vibrations of the chassis 10, and wherein the controller 2 is configured to:
- convert, in the frequency domain, both the one or more first signals S_{A} and second signals Sv received into respective first and second frequency values representing the possible vibrations of the chassis 10 and the angular velocity values of the rotating driveshaft 12;
- compare the first frequency values representing the converted possible vibrations of the chassis 10 with the second frequency values representing the converted angular velocity values of the rotating driveshaft 12; and
- diagnose the presence of detected vibrations caused by the driveshaft 12 when at least one of said first frequency values is a harmonic of a corresponding one frequency of said second frequency values.

The at least one accelerometer 4 can be of any suitable type already available on the market.

As those skilled in the art may appreciate, the at least one pressure sensor 3 and the at least one accelerometer 5 can be used together or alternatively to each other.

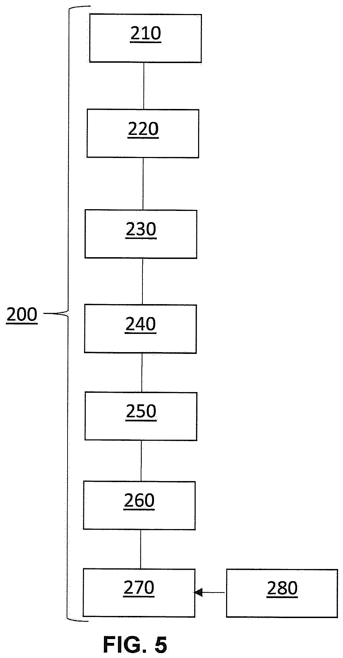

Fig. 5 is a flow chart of an exemplary method 200 for detecting vibrations on an automotive vehicle, such as the automotive vehicle 1, which may be carried out by using the components of the system 100 as previously described.

In particular, according to some examples, the method 200 comprises, in whichever suitable order, the following steps:
- 210: by means of at least one sensor 3, 5, transmitting to a controller 2 one or more first signals S_{P}, S_{A} indicative of vibrations possibly present onboard the automotive vehicle 1;
- 220: transmitting to the controller 2, by means of at least one speed sensor 4, one or more second signals Sv indicative of values of the angular velocity of the rotating driveshaft 12;
- 230: by means of the controller 2, converting, in the frequency domain, both the one or more first signals S_{P}, S_{A} and second signals Sv received into corresponding first and second frequency values representing possible vibrations present onboard the automotive vehicle 1 and the angular velocity values of the rotating driveshaft 12, respectively;
- 240: comparing, by means of the controller 2, the first frequency values representing the converted possible vibrations onboard the automotive vehicle 1 with the second frequency values representing the converted angular velocity values of the rotating driveshaft 12; and
- 250: diagnosing the presence of detected vibrations caused by the driveshaft 12 when at least one of said first frequency values is a harmonic of a corresponding one frequency of said second frequency values.

In some possible examples, the method further comprises:
- 260: comparing, by means of the controller 2, the amplitude of the at least one frequency whose value is a harmonic of a corresponding one frequency of said second frequency values with a preset threshold; and when the compared amplitude is higher than the preset threshold:
   - 270: generating, by means of the controller 2, a command signal Sc for adjusting the vertical height H between the chassis 10 and the drive axle 14.

In some examples, the method 200 further comprises providing 280 the controller 2, by means of a level sensor 7, with signals S_{L} indicative of the actual vertical height H between the chassis 10 and the drive axle 14.

In some possible examples, said generating 270 comprises generating said command signal Sc for adjusting the vertical height H to a desired value based on the signals S_{L} indicative of the actual vertical height H between the chassis 10 and the drive axle 14 provided by the level sensor 7.

In some possible examples, said generating 270 comprises automatically varying the air volume contained in the at least one suspension air bellows 20 to adjust said vertical height H.

In some possible examples, the at least one sensor comprises a pressure sensor 3, and wherein said transmitting 210 to a controller 2 one or more first signals indicative of vibrations possibly present onboard the automotive vehicle 1 comprises transmitting to the controller 2 one or more first signals S_{P} indicative of pressure values detected in the at least one suspension air bellows 20. Accordingly, the step of converting 230 comprises converting, in the frequency domain, both the one or more first signals S_{P} and second signals Sv received into respective first and second frequency values representing the pressure values in the suspension air bellows 20 and the angular velocity values of the rotating driveshaft 12, and wherein the step of comparing 240 comprises comparing the first frequency values representing the converted pressure values in the suspension air bellows 20 with the second frequency values representing the converted angular velocity values of the rotating driveshaft 12. According to this example, the step of diagnosing 250 comprises diagnosing the presence of detected vibrations caused by the driveshaft 12 when at least one of said first frequency values is a harmonic of a corresponding one frequency of said second frequency values.

In some possible examples, the at least one sensor comprises an accelerometer 5 which is attached to the chassis 10 and is configured to transmit to the controller 2 one or more first signals S_{A} indicative of possible vibrations of the chassis 10. Accordingly, the step of transmitting 210 to a controller 2 one or more first signals indicative of vibrations possibly present onboard the automotive vehicle 1 comprises transmitting to the controller 2 one or more first signals S_{A} indicative of possible vibrations of the chassis 10, and wherein the step of converting 230 comprises converting, in the frequency domain, both the one or more first signals S_{A} and second signals Sv received into respective first and second frequency values representing the possible vibrations of the chassis 10 and the angular velocity values of the rotating driveshaft 12. According to this example, the step of comparing 240 comprises comparing the first frequency values representing the converted possible vibrations of the chassis 10 with the second frequency values representing the converted angular velocity values of the rotating driveshaft 12, and the step of diagnosing 250 comprises diagnosing the presence of detected vibrations caused by the driveshaft 12 when at least one of said first frequency values is a harmonic of a corresponding one frequency of said second frequency values.

As those skilled in the art may readily appreciate, at least some of the steps above described may be executed in a different order. For example, the steps 220 and 230 may be executed in parallel to each other or in an order inverted with respect to the order above disclosed.

Example 1: A system 100 for detecting vibrations in an automotive vehicle 1 which comprises at least a chassis 10, a driveline system which includes a rotating driveshaft 12 and an axle 14, and a suspension system which includes at least one suspension air bellows 20, the detecting system 100 at least comprising, suitable to be mounted on board of the automotive vehicle 1:
- a controller 2;
- at least one sensor 3, 5 configured to transmit to the controller 2 one or more first signals S_{P}, S_{A} indicative of vibrations possibly present onboard the automotive vehicle 1;
- at least one speed sensor 4 configured to transmit to the controller 2 one or more second signals Sv indicative of values of the angular velocity of the rotating driveshaft 12; wherein the controller 2 is configured to:
   - convert, in the frequency domain, both the one or more first signals S_{P}, S_{A} and second signals Sv received into respective first and second frequency values;
   - compare the first frequency values representing the converted possible vibrations onboard the automotive vehicle 1 with the second frequency values representing the converted angular velocity values of the rotating driveshaft 12; and
   - diagnose the presence of detected vibrations caused by the driveshaft 12 when at least one of said first frequency values is a harmonic of a corresponding one frequency of said second frequency values.

Example 2: The system 100 of example 1, wherein the controller 2 is further configured to generate a command signal Sc for adjusting the vertical height H between the chassis 10 and the drive axle 14 when the amplitude of the at least one frequency whose value is a harmonic of a corresponding one frequency of said second frequency values is higher than a preset threshold.

Example 3: The system 100 of any of examples 1-2, further comprising a level sensor 7 configured to provide the controller 2 with signals S_{L} indicative of the actual vertical height H between the chassis 10 and the drive axle 14.

Example 4: The system 100 of example 3, wherein the controller 2 is configured to generate a command signal Sc for adjusting the vertical height H to a desired value based on the signals S_{L} indicative of the actual vertical height H between the chassis 10 and the drive axle 14 provided by the level sensor 7.

Example 5: The system 100 of any of examples 2-4, wherein the controller 2 is configured to cause automatically varying the air volume contained in the at least one suspension air bellows 20 to adjust said vertical height H.

Example 6: The system 100 of any of examples 1-5, wherein said at least one sensor comprises at least one pressure sensor 3 configured to transmit to the controller 2 one or more first signals S_{P} indicative of pressure values detected in the at least one suspension air bellows 20; and wherein the controller 2 is configured to:
- convert, in the frequency domain, both the one or more first signals S_{P} and second signals Sv received into respective first and second frequency values representing the pressure values in the suspension air bellows 20 and the angular velocity values of the rotating driveshaft 12;
- compare the first frequency values representing the converted pressure values in the suspension air bellows 20 with the second frequency values representing the converted angular velocity values of the rotating driveshaft 12; and
- diagnose the presence of detected vibrations caused by the driveshaft 12 when at least one of said first frequency values is a harmonic of a corresponding one frequency of said second frequency values.

Example 7: The system 100 of any of examples 1-6, wherein said at least one sensor comprises an accelerometer 5 which is attached to the chassis 10 and is configured to transmit to the controller 2 one or more first signals S_{A} indicative of possible vibrations of the chassis 10, and wherein the controller 2 is configured to:
- convert, in the frequency domain, both the one or more first signals S_{A} and second signals Sv received into respective first and second frequency values representing the possible vibrations of the chassis 10 and the angular velocity values of the rotating driveshaft 12;
- compare the first frequency values representing the converted possible vibrations of the chassis 10 with the second frequency values representing the converted angular velocity values of the rotating driveshaft 12; and
- diagnose the presence of detected vibrations caused by the driveshaft 12 when at least one of said first frequency values is a harmonic of a corresponding one frequency of said second frequency values.

Example 8: An automotive vehicle 1 comprising a system 100 for detecting vibrations according to any of examples 1-7.

Example 9: A method 200 for detecting vibrations in an automotive vehicle 1 which comprises at least a chassis 10, a driveline system which includes a rotating driveshaft 12 and a drive axle 14, and a suspension system which includes at least one suspension air bellows 20, the method 200 comprising, in whichever suitable order:
- 210: by means of at least one sensor 3, 5, transmitting to a controller 2 one or more first signals S_{P}, S_{A} indicative of vibrations possibly present onboard the automotive vehicle 1;

- 220: transmitting to the controller 2, by means of at least one speed sensor 4, one or more second signals Sv indicative of values of the angular velocity of the rotating driveshaft 12;
- 230: by means of the controller 2, converting, in the frequency domain, both the one or more first signals S_{P}, S_{A} and second signals Sv received into corresponding first and second frequency values representing possible vibrations present onboard the automotive vehicle 1 and the angular velocity values of the rotating driveshaft 12, respectively;
- 240: comparing, by means of the controller 2, the first frequency values representing the converted possible vibrations onboard the automotive vehicle 1 with the second frequency values representing the converted angular velocity values of the rotating driveshaft 12; and
- 250: diagnosing the presence of detected vibrations caused by the driveshaft 12 when at least one of said first frequency values is a harmonic of a corresponding one frequency of said second frequency values.

Example 10: The method 200 of example 9, further comprising:
- 260: comparing, by means of the controller 2, the amplitude of the at least one frequency whose value is a harmonic of a corresponding one frequency of said second frequency values with a preset threshold; and when the compared amplitude is higher than the preset threshold:
   - 270: generating, by means of the controller 2, a command signal Sc for adjusting the vertical height H between the chassis 10 and the drive axle 14.

Example 11: The method 200 of any of examples 9-10, further comprising:
- (280): providing the controller 2, by means of a level sensor 7, with signals S_{L} indicative of the actual vertical height H between the chassis 10 and the drive axle 14.

Example 12: The method 200 of example 11, wherein said generating 270 comprises generating said command signal Sc for adjusting the vertical height H to a desired value based on the signals S_{L} indicative of the actual vertical height H between the chassis 10 and the drive axle 14 provided by the level sensor 7.

Example 13: The method 200 of any of examples 10-12, wherein said generating 270 comprises automatically varying the air volume contained in the at least one suspension air bellows 20 to adjust said vertical height H.

Example 14: The method 200 of any of examples 9-13, wherein said at least one sensor comprises a pressure sensor 3, and wherein said transmitting 210 to a controller 2 one or more first signals indicative of vibrations possibly present onboard the automotive vehicle 1 comprises transmitting to the controller 2 one or more first signals S_{P} indicative of pressure values detected in the at least one suspension air bellows 20, wherein said converting 230 comprises converting, in the frequency domain, both the one or more first signals S_{P} and second signals Sv received into respective first and second frequency values representing the pressure values in the suspension air bellows 20 and the angular velocity values of the rotating driveshaft 12; wherein said comparing 240 comprises comparing the first frequency values representing the converted pressure values in the suspension air bellows 20 with the second frequency values representing the converted angular velocity values of the rotating driveshaft 12; and wherein said diagnosing 250 comprises diagnosing the presence of detected vibrations caused by the driveshaft 12 when at least one of said first frequency values is a harmonic of a corresponding one frequency of said second frequency values.

Example 15: The method 200 of any of examples 9-14, wherein said at least one sensor comprises an accelerometer 5 which is attached to the chassis 10 and is configured to transmit to the controller 2 one or more first signals S_{A} indicative of possible vibrations of the chassis 10, wherein said transmitting 210 to a controller 2 one or more first signals S_{P}, S_{A} indicative of vibrations possibly present onboard the automotive vehicle 1 comprises transmitting to the controller 2 one or more first signals S_{A} indicative of possible vibrations of the chassis 10, and wherein said converting 230 comprises converting, in the frequency domain, both the one or more first signals Sₐ and second signals Sv received into respective first and second frequency values representing the possible vibrations of the chassis 10 and the angular velocity values of the rotating driveshaft 12; wherein said comparing 240 comprises comparing the first frequency values representing the converted possible vibrations of the chassis 10 with the second frequency values representing the converted angular velocity values of the rotating driveshaft 12; and wherein said diagnosing 250 comprises diagnosing the presence of detected vibrations caused by the driveshaft 12 when at least one of said first frequency values is a harmonic of a corresponding one frequency of said second frequency values.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

In particular, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to. Concerning electronic and/or software means, each of the above listed terms, as well as equivalent/similar ones, means and encompasses electronic circuits or parts thereof, as well as stored, embedded or running software codes and/or routines, algorithms, or complete programs, suitably designed for achieving the technical result and/or the functional performances for which such means are devised.

In addition, in the present disclosure, the numeral ordinals first, second, et cetera..., are used only for the sake of clarity of description and in no way they should be understood as limiting for whatsoever reason.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (100) for detecting vibrations in an automotive vehicle (1) which comprises at least a chassis (10), a driveline system which includes a rotating driveshaft (12) and an axle (14), and a suspension system which includes at least one suspension air bellows (20), the detecting system (100) at least comprising, suitable to be mounted on board of the automotive vehicle (1):
- a controller (2);
- at least one sensor (3, 5) configured to transmit to the controller (2) one or more first signals (S_{P}, S_{A}) indicative of vibrations possibly present onboard the automotive vehicle (1);
- at least one speed sensor (4) configured to transmit to the controller (2) one or more second signals (Sv) indicative of values of the angular velocity of the rotating driveshaft (12); wherein the controller (2) is configured to:
- convert, in the frequency domain, both the one or more first signals (S_{P}, S_{A}) and second signals (Sv) received into respective first and second frequency values;
- compare the first frequency values representing the converted possible vibrations onboard the automotive vehicle (1) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

2. The system (100) of claim 1, wherein the controller (2) is further configured to generate a command signal (Sc) for adjusting the vertical height between the chassis (10) and the drive axle (14) when the amplitude of the at least one frequency whose value is a harmonic of a corresponding one frequency of said second frequency values is higher than a preset threshold.

3. The system (100) of any of claims 1-2, wherein it comprises a level sensor (7) configured to provide the controller (2) with signals (S_{L}) indicative of the actual vertical height between the chassis (10) and the drive axle (14).

4. The system (100) of claim 3, wherein the controller (2) is configured to generate a command signal (Sc) for adjusting the vertical height to a desired value based on the signals (S_{L}) indicative of the actual vertical height between the chassis (10) and the drive axle (14) provided by the level sensor (7).

5. The system (100) of any of claims 2-4, wherein the controller (2) is configured to cause automatically varying the air volume contained in the at least one suspension air bellows (20) to adjust said vertical height.

6. The system (100) of any of claims 1-5, wherein said at least one sensor (3, 5) comprises at least one pressure sensor (3) configured to transmit to the controller (2) one or more first signals (S_{P}) indicative of pressure values detected in the at least one suspension air bellows (20); and wherein the controller (2) is configured to:
- convert, in the frequency domain, both the one or more first signals (S_{P}) and second signals (Sv) received into respective first and second frequency values representing the pressure values in the suspension air bellows (20) and the angular velocity values of the rotating driveshaft (12);
- compare the first frequency values representing the converted pressure values in the suspension air bellows (20) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

7. The system (100) of any of claims 1-6, wherein said at least one sensor (3, 5) comprises an accelerometer (5) which is attached to the chassis (10) and is configured to transmit to the controller (2) one or more first signals (S_{A}) indicative of possible vibrations of the chassis (10), and wherein the controller (2) is configured to:
- convert, in the frequency domain, both the one or more first signals (S_{A}) and second signals (Sv) received into respective first and second frequency values representing the possible vibrations of the chassis (10) and the angular velocity values of the rotating driveshaft (12);
- compare the first frequency values representing the converted possible vibrations of the chassis (10) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

8. An automotive vehicle (1) comprising a system (100) for detecting vibrations according to any of claims 1-7.

9. A method (200) for detecting vibrations in an automotive vehicle (1) which comprises at least a chassis (10), a driveline system which includes a rotating driveshaft (12) and a drive axle (14), and a suspension system which includes at least one suspension air bellows (20), the method (200) comprising, in whichever suitable order:
- (210): by means of at least one sensor (3, 5), transmitting to a controller (2) one or more first signals (S_{P}, S_{A}) indicative of vibrations possibly present onboard the automotive vehicle (1);
- (220): transmitting to the controller (2), by means of at least one speed sensor (4), one or more second signals (Sv) indicative of values of the angular velocity of the rotating driveshaft (12);
- (230): by means of the controller (2), converting, in the frequency domain, both the one or more first signals (S_{P}, S_{A}) and second signals (Sv) received into corresponding first and second frequency values representing possible vibrations present onboard the automotive vehicle (1) and the angular velocity values of the rotating driveshaft (12), respectively;
- (240): comparing, by means of the controller (2), the first frequency values representing the converted possible vibrations onboard the automotive vehicle (1) with the second frequency values representing the converted angular velocity values of the rotating driveshaft (12); and
- (250): diagnosing the presence of detected vibrations caused by the driveshaft (12) when at least one of said first frequency values is a harmonic of a corresponding one frequency of said second frequency values.

10. The method (200) of claim 9, further comprising:
- (260): comparing, by means of the controller (2), the amplitude of the at least one frequency whose value is a harmonic of a corresponding one frequency of said second frequency values with a preset threshold;
and when the compared amplitude is higher than the preset threshold:
- (270): generating, by means of the controller (2), a command signal (Sc) for adjusting the vertical height (H) between the chassis (10) and the drive axle (14).

11. The method (200) of any of claims 9-10, further comprising providing (280) the controller (2), by means of a level sensor (7), with signals (S_{L}) indicative of the actual vertical height between the chassis (10) and the drive axle (14).

12. The method (200) of claim 11, wherein said generating (270) comprises generating said command signal (Sc) for adjusting the vertical height o a desired value based on the signals (S_{L}) indicative of the actual vertical height between the chassis (10) and the drive axle (14) provided by the level sensor (7).

13. The method of any of claims 10-12, wherein said generating (270) comprises automatically varying the air volume contained in the at least one suspension air bellows (20) to adjust said vertical height (H).

14. The method (200) of any of claims 9-13, wherein said at least one sensor (3, 5) comprises a pressure sensor (3), and wherein said transmitting (210) to a controller (2) one or more first signals (S_{P}, S_{A}) indicative of vibrations possibly present onboard the automotive vehicle (1) comprises transmitting to the controller (2) one or more first signals (S_{P}) indicative of pressure values detected in the at least one suspension air bellows (20), wherein said converting (230) comprises converting, in the frequency domain, both the one or more first signals (S_{P}) and second signals (Sv) received into respective first and second frequency values representing the pressure values in the suspension air bellows (20) and the angular velocity values of the rotating driveshaft (12); wherein said comparing (240) comprises comparing the first frequency values representing the converted pressure values in the suspension air bellows (20) with the second frequency values representing the converted angular velocity values of the rotating driveshaft (12); and wherein said diagnosing (250) comprises diagnosing the presence of detected vibrations caused by the driveshaft (12) when at least one of said first frequency values is a harmonic of a corresponding one frequency of said second frequency values.

15. The method (200) of any of claims 9-14, wherein said at least one sensor (3, 5) comprises an accelerometer (5) which is attached to the chassis (10) and is configured to transmit to the controller (2) one or more first signals (S_{A}) indicative of possible vibrations of the chassis (10), wherein said transmitting (210) to a controller (2) one or more first signals (S_{P}, S_{A}) indicative of vibrations possibly present onboard the automotive vehicle (1) comprises transmitting to the controller (2) one or more first signals (S_{A}) indicative of possible vibrations of the chassis (10), and wherein said converting (230) comprises converting, in the frequency domain, both the one or more first signals (Sₐ) and second signals (Sv) received into respective first and second frequency values representing the possible vibrations of the chassis (10) and the angular velocity values of the rotating driveshaft (12); wherein said comparing (240) comprises comparing the first frequency values representing the converted possible vibrations of the chassis (10) with the second frequency values representing the converted angular velocity values of the rotating driveshaft (12); and wherein said diagnosing (250) comprises diagnosing the presence of detected vibrations caused by the driveshaft (12) when at least one of said first frequency values is a harmonic of a corresponding one frequency of said second frequency values.

## Amended claims

### Amended claims in accordance with Rule 137(2) EPC.

1. A system (100) suitable for detecting vibrations in an automotive vehicle (1) which comprises at least a chassis (10), a driveline system which includes a rotating driveshaft (12) and an axle (14), and a suspension system which includes at least one suspension air bellows (20), the detecting system (100) at least comprising, suitable to be mounted on board of the automotive vehicle (1):
- a controller (2);
- at least one sensor (3, 5) configured to transmit to the controller (2) one or more first signals (S_{P}, S_{A}) indicative of vibrations possibly present onboard the automotive vehicle (1);
- at least one speed sensor (4) configured to transmit to the controller (2) one or more second signals (S_{V}) indicative of values of the angular velocity of the rotating driveshaft (12); the system (100) being **characterized in that** the controller (2) is configured to:
- convert, in the frequency domain, both the one or more first signals (S_{P}, S_{A}) and second signals (S_{V}) received into respective first and second frequency values;
- compare the first frequency values representing the converted possible vibrations onboard the automotive vehicle (1) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

2. The system (100) of claim 1, wherein the controller (2) is further configured to generate a command signal (Sc) for adjusting the vertical height between the chassis (10) and the drive axle (14) when the amplitude of the at least one frequency whose value is a harmonic of a corresponding one frequency of said second frequency values is higher than a preset threshold.

3. The system (100) of any of claims 1-2, wherein it comprises a level sensor (7) configured to provide the controller (2) with signals (S_{L}) indicative of the actual vertical height between the chassis (10) and the drive axle (14).

4. The system (100) of claim 3, wherein the controller (2) is configured to generate a command signal (Sc) for adjusting the vertical height to a desired value based on the signals (S_{L}) indicative of the actual vertical height between the chassis (10) and the drive axle (14) provided by the level sensor (7).

5. The system (100) of any of claims 2-4, wherein the controller (2) is configured to cause automatically varying the air volume contained in the at least one suspension air bellows (20) to adjust said vertical height.

6. The system (100) of any of claims 1-5, wherein said at least one sensor (3, 5) comprises at least one pressure sensor (3) configured to transmit to the controller (2) one or more first signals (S_{P}) indicative of pressure values detected in the at least one suspension air bellows (20); and wherein the controller (2) is configured to:
- convert, in the frequency domain, both the one or more first signals (S_{P}) and second signals (S_{V}) received into respective first and second frequency values representing the pressure values in the suspension air bellows (20) and the angular velocity values of the rotating driveshaft (12);
- compare the first frequency values representing the converted pressure values in the suspension air bellows (20) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

7. The system (100) of any of claims 1-6, wherein said at least one sensor (3, 5) comprises an accelerometer (5) which is suitable to be attached to the chassis (10) and is configured to transmit to the controller (2) one or more first signals (S_{A}) indicative of possible vibrations of the chassis (10), and wherein the controller (2) is configured to:
- convert, in the frequency domain, both the one or more first signals (S_{A}) and second signals (S_{V}) received into respective first and second frequency values representing the possible vibrations of the chassis (10) and the angular velocity values of the rotating driveshaft (12);
- compare the first frequency values representing the converted possible vibrations of the chassis (10) with the second frequency values representing the converted angular velocity values of the rotating driveshaft (12); and
- diagnose the presence of detected vibrations caused by the driveshaft (12) when at least one of said first frequency values is a harmonic of a corresponding one frequency of said second frequency values.

8. An automotive vehicle (1) comprising a system (100) for detecting vibrations according to any of claims 1-7.

9. A method (200) for detecting vibrations in an automotive vehicle (1) which comprises at least a chassis (10), a driveline system which includes a rotating driveshaft (12) and a drive axle (14), and a suspension system which includes at least one suspension air bellows (20), the method (200) comprising, in whichever suitable order:
- (210): by means of at least one sensor (3, 5), transmitting to a controller (2) one or more first signals (S_{P}, S_{A}) indicative of vibrations possibly present onboard the automotive vehicle (1); the method being **characterized in that** it further comprises:
- (220): transmitting to the controller (2), by means of at least one speed sensor (4), one or more second signals (S_{V}) indicative of values of the angular velocity of the rotating driveshaft (12);
- (230): by means of the controller (2), converting, in the frequency domain, both the one or more first signals (S_{P}, S_{A}) and second signals (S_{V}) received into corresponding first and second frequency values representing possible vibrations present onboard the automotive vehicle (1) and the angular velocity values of the rotating driveshaft (12), respectively;
- (240): comparing, by means of the controller (2), the first frequency values representing the converted possible vibrations onboard the automotive vehicle (1) with the second frequency values representing the converted angular velocity values of the rotating driveshaft (12); and
- (250): diagnosing the presence of detected vibrations caused by the driveshaft (12) when at least one of said first frequency values is a harmonic of a corresponding one frequency of said second frequency values.

10. The method (200) of claim 9, further comprising:
- (260): comparing, by means of the controller (2), the amplitude of the at least one frequency whose value is a harmonic of a corresponding one frequency of said second frequency values with a preset threshold;
and when the compared amplitude is higher than the preset threshold:
- (270): generating, by means of the controller (2), a command signal (Sc) for adjusting the vertical height (H) between the chassis (10) and the drive axle (14).

11. The method (200) of any of claims 9-10, further comprising providing (280) the controller (2), by means of a level sensor (7), with signals (S_{L}) indicative of the actual vertical height between the chassis (10) and the drive axle (14).

12. The method (200) of claim 11, wherein said generating (270) comprises generating said command signal (Sc) for adjusting the vertical height to a desired value based on the signals (S_{L}) indicative of the actual vertical height between the chassis (10) and the drive axle (14) provided by the level sensor (7).

13. The method of any of claims 10-12, wherein said generating (270) comprises automatically varying the air volume contained in the at least one suspension air bellows (20) to adjust said vertical height (H).

14. The method (200) of any of claims 9-13, wherein said at least one sensor (3, 5) comprises a pressure sensor (3), and wherein said transmitting (210) to a controller (2) one or more first signals (S_{P}, S_{A}) indicative of vibrations possibly present onboard the automotive vehicle (1) comprises transmitting to the controller (2) one or more first signals (S_{P}) indicative of pressure values detected in the at least one suspension air bellows (20), wherein said converting (230) comprises converting, in the frequency domain, both the one or more first signals (S_{P}) and second signals (S_{V}) received into respective first and second frequency values representing the pressure values in the suspension air bellows (20) and the angular velocity values of the rotating driveshaft (12); wherein said comparing (240) comprises comparing the first frequency values representing the converted pressure values in the suspension air bellows (20) with the second frequency values representing the converted angular velocity values of the rotating driveshaft (12); and wherein said diagnosing (250) comprises diagnosing the presence of detected vibrations caused by the driveshaft (12) when at least one of said first frequency values is a harmonic of a corresponding one frequency of said second frequency values.

15. The method (200) of any of claims 9-14, wherein said at least one sensor (3, 5) comprises an accelerometer (5) which is attached to the chassis (10) and is configured to transmit to the controller (2) one or more first signals (S_{A}) indicative of possible vibrations of the chassis (10), wherein said transmitting (210) to a controller (2) one or more first signals (S_{P}, S_{A}) indicative of vibrations possibly present onboard the automotive vehicle (1) comprises transmitting to the controller (2) one or more first signals (S_{A}) indicative of possible vibrations of the chassis (10), and wherein said converting (230) comprises converting, in the frequency domain, both the one or more first signals (Sₐ) and second signals (S_{V}) received into respective first and second frequency values representing the possible vibrations of the chassis (10) and the angular velocity values of the rotating driveshaft (12); wherein said comparing (240) comprises comparing the first frequency values representing the converted possible vibrations of the chassis (10) with the second frequency values representing the converted angular velocity values of the rotating driveshaft (12); and wherein said diagnosing (250) comprises diagnosing the presence of detected vibrations caused by the driveshaft (12) when at least one of said first frequency values is a harmonic of a corresponding one frequency of said second frequency values.
